# EUROPEAN PATENT APPLICATION

(11) **EP 4 737 200 A1**
(43) Date of publication of application: **06.05.2026**
(21) Application number: 24852303.7
(22) Date of filing: 06.08.2024
(51) Int. Cl.: B60L 53/80, B60L 53/30, B60L 53/60

(54) **BATTERY SWAPPING SYSTEM AND BATTERY SWAPPING METHOD**

(30) Priority: 10.08.2023 KR 20230105152
(71) Applicant: LG Energy Solution, Ltd., Seoul 07335 (KR)
(72) Inventor: KIM, Sung Won, Daejeon 34122 (KR)
(74) Representative: Plasseraud IP
(86) International application number: PCT/KR2024/011629
(87) International publication number: WO 2025/033949

(57) **Abstract**

A battery swapping system according to an embodiment of the present invention includes: a main body; a plurality of replacement units which are mounted on the main body and on which a battery is mounted and charged; a detection unit which is arranged on the main body to face a user and detects body information; a transfer unit for transferring, to the user, location information of the replacement units and charging information of the battery mounted on the replacement unit by using at least one method among an image providing method or a speech method; and a control unit for controlling the operation of the replacement unit and the operation of the transfer unit according to the body information of the user detected by the detection unit, wherein the control unit may select one replacement unit among of the plurality of replacement units on the basis of the body information of the user detected by the detection unit, and operate the transfer unit to inform the user of information about the selected replacement unit.

## Description

### TECHNICAL FIELD

### CROSS-REFERENCE TO RELATED APPLICATION

The present application claims the benefit of the priority of Korean Patent Application No. 10-2023-0105152, filed on August 10, 2023, which is hereby incorporated by reference in its entirety.

### TECHNICAL FIELD

The present invention relates to a battery swapping system and method that improve use convenience for a user.

### BACKGROUND ART

Research and development on power generation based on Eco-friendly energy sources are being conducted to solve the problem of environmental pollution due to the use of petroleum resources and to resolve the problem of energy shortage due to the depletion of petroleum resources. Particularly, research on secondary batteries that are capable of being repeatedly charged/discharged and thus have high usability is actively conducted, and research is being conducted on various aspects of secondary batteries, such as materials, structures, processes, and stability.

In general, the types of secondary batteries include nickel-cadmium batteries, nickel-hydrogen batteries, lithium ion batteries, and lithium ion polymer batteries, and the like. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In addition, in case of devices that require high output and high capacity electric energy such as electric vehicles or electric motorcycles, a battery pack in which a plurality of secondary batteries are coupled to each other is often utilized. However, since the battery pack is a high-output and high-capacity electric energy storage device, the battery pack has a disadvantage of taking somewhat time to recharge the electric energy.

To overcome this drawback, a battery swapping device provided with a plurality of battery packs that are previously charged is often utilized. For example, a battery swapping station (BSS) is installed on a certain area, and a user may easily and quickly swap a used battery pack for a charged battery pack through the battery swapping station. Since the battery swapping station allows the user to immediately swap the battery pack, the time required to charge and replace the battery pack is shortened, thereby improving usability of the battery pack.

However, since the battery pack is designed for large devices such as automobiles and motorcycles, there is a problem in that the battery pack is manufactured to be heavy, and a considerable amount of force is required when the user puts the battery pack into the battery swapping station and eject the battery pack from the battery swapping station. The above problem may cause a problem in that is reduces use convenience of the battery swapping station and potentially leads to user's physical injury.

Thus, there is a need for the battery swapping system and method that operate without requiring more force from the user, thereby improving the user convenience.

### DISCLOSURE OF THE INVENTION

### TECHNICAL PROBLEM

An object of the present invention for solving the above problem is to provide a battery swapping system and method that operate according to user's body information to improve use convenience.

### TECHNICAL SOLUTION

A battery swapping system according to an embodiment of the present invention may include a main body, a plurality of swapping parts which are mounted on the main body and on which a battery is mounted to be charged, a detection part disposed on the main body to face a user and configured to detect user's body information, a transmission part configured to transmit location information of the swapping part and charging information of a battery mounted on the swapping part to the user in at least one of a video provision manner or an audio manner, and a controller configured to control an operation of the swapping part and an operation of the transmission part according to the user's body information detected by the detection part, wherein the controller may be configured to select one of the plurality of swapping parts based on the user's body information detected by the detection part and operate the transmission part to inform information of the selected swapping part to the user.

The detection part may be configured to detect user's height information, and the swapping part may be provided in plurality to be arranged in a height direction with respect to the ground.

The controller may be configured to select one swapping part, which is the closest to a middle height based on the user's height information, among the plurality of swapping parts.

The detection part may be configured to detect user's waist and chest portions.

The controller may be configured to control the swapping part so that the swapping part moves between the user's waist and chest portions.

The plurality of swapping parts may be movable integrally.

The main body may be movable integrally together with the plurality of swapping parts.

The battery swapping system according to the embodiment of the present invention may further include a driving part disposed below the main body to support a bottom surface of the main body and configured to move the main body and the plurality of swapping part upward or downward.

The battery swapping system according to the embodiment of the present invention may further include a storage part configured to store location information of the swapping part, charging information of the battery mounted on the swapping part, and operation information of the swapping part controlled by the controller.

The controller may be configured to calculate the location information of the swapping part, which is stored in the storage part, as coordinate values, calculate an average of the coordinate values of the swapping part, and allow the swapping part to standby at a position corresponding to the average of the coordinate values.

A battery swapping method according to another embodiment of the present invention may include a detection process of detecting user's body information by a detection part mounted on a main body, a transmission process of selecting one swapping part of a plurality of swapping parts, on which a battery is mounted to be charged, based on the user's body information detected by the detection part to transmit information of the selected swapping part to a user through a transmission part, by a controller, a control process of controlling an operation of the swapping part by the controller according to the user's body information detected by the detection part, and a swapping process of putting a used battery into one swapping part of the plurality of swapping parts to eject a charged battery to the other swapping part of the plurality of swapping parts.

In the detection process, the detection part may detect user's height information, and in the transmission process, the controller may select one swapping part, which is the closest to a middle height based on the user's height information, among the plurality of swapping parts.

In the detection process, the detection part may detect user's waist and chest portions, and in the control process, the controller may control the swapping part so that the swapping part moves between the user's waist and chest portions.

In the control process, the plurality of swapping parts may integrally move by the controller.

### ADVANTAGEOUS EFFECTS

According to the preferred embodiment of the present invention, the use convenience may be improved by operating according to the user's body information to improve the use convenience and previously prevent the physical injury of the user from occurring.

In addition, the configurations according to preferred embodiments of the present invention may include the effects that are capable of being easily predicted by those skilled in the art.

### BRIEF DESCRIPTION OF THE DRAWINGS

The following drawings attached in this specification illustrate a preferred embodiment of the present disclosure and function to make further understood the technical spirit of the present disclosure along with the detailed description of the present disclosure. The present disclosure should not be construed as being limited to only the drawings.
FIG. 1 is a view illustrating a state in which a battery swapping system is used according to an embodiment of the present invention.
FIG. 2 is a block diagram of the battery swapping system according to an embodiment of the present invention.
FIG. 3 is a view illustrating a state in which a driving part is installed according to an embodiment of the present invention.
FIG. 4 is a flowchart illustrating a battery swapping method according to another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

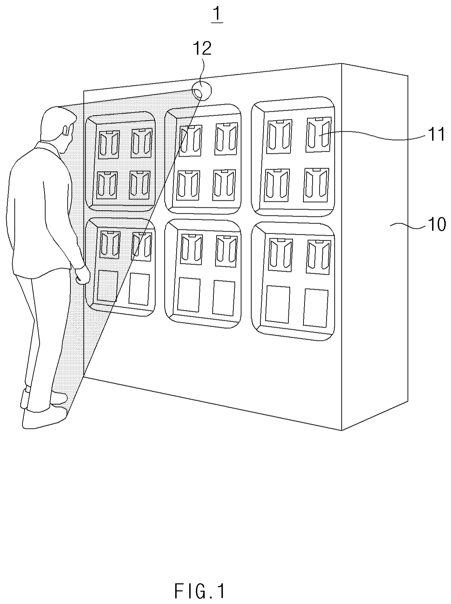

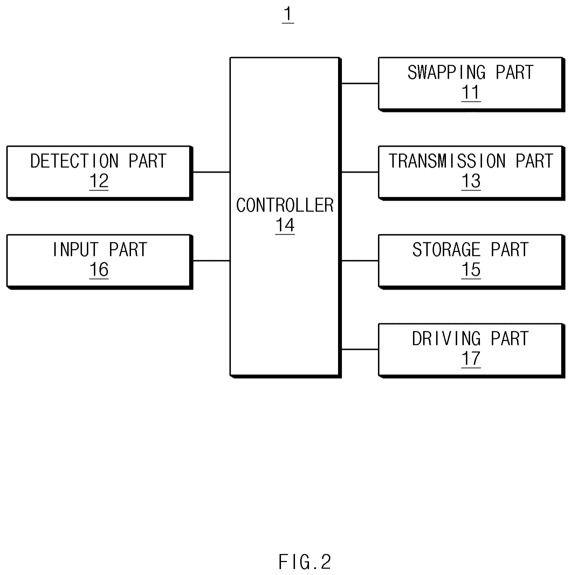

FIG. 1 is a view illustrating a state in which a battery swapping system 1 is used according to an embodiment of the present invention, and FIG. 2 is a block diagram of the battery swapping system 1 according to an embodiment of the present invention.

Referring to FIGS. 1 and 2, the battery swapping system 1 according to an embodiment of the present invention may establish an environment in which a user using a battery easily and quickly swaps a battery. For example, the battery swapping system 1 may be configured to allow the user to swap the battery as necessary installing a device capable of swapping the battery in a certain area. Specifically, the battery swapping system 1 may include a battery swapping station (BSS).

As described above, due to a function of the battery swapping system 1, the user may put a used battery into the battery swapping station and eject a charged battery from the battery swapping station to save a time taken to charge the battery, thereby more effectively utilizing the battery.

In addition, the battery swapping system 1 may include a specific structure to enable the user to swap the battery more conveniently. For example, the battery swapping system 1 may include a battery swapping station that is driven according to the user's body structure.

In addition, the battery swapping system 1 may recognize the user's body structure to select a chargeable battery at a position that is advantageous to the body structure and inform the selected battery to the user, thereby further improving user's convenience.

Specifically, the battery swapping system 1 may include a main body 10, a swapping part 11, a detection part 12, a transmission part 13, and a controller 14.

The main body 10 may be installed in a certain area. For example, the main body 10 may be installed on the ground as a portion of the device, in which the battery is swapped, and may define a body frame in which the swapping part 11 and the detection part 12 described later are installed.

The swapping part 11 may mount the battery therein to charge the battery. For example, the swapping part 11 may be provided in plurality, and the plurality of swapping parts 11 may be mounted on the main body 10. The plurality of swapping parts 11 may be provided as a plurality of recessed compartments, in which the batteries are mounted, and the batteries may be mounted in the plurality of swapping parts 11 and then be charged.

Specifically, the used battery may be inserted into the swapping part 11, and the battery may be coupled or contacted with a connection terminal inside the swapping part 11, and thus, the battery inside the swapping part 11 may be charged. In this case, the connection terminal inside the swapping part 11 may be electrically connected to a wire disposed inside the main body 10, and the wire disposed inside the main body 10 may be connected to an external power charging device, so that the battery inside the swapping part 11 is charged.

The swapping part 11 may be provided in plurality to be arranged along a height direction with respect to the ground. For example, the swapping part 11 may be provided in plurality to be arranged in a direction perpendicular to the ground. In addition, the swapping part 11 may be provided in plurality to be arranged in a direction parallel to the ground. That is, the plurality of swapping parts 11 may be widely distributed in a direction facing the user so that the battery is swapped according to the user's convenience.

A portion of the plurality of swapping parts 11 may be movable while mounted inside the main body 10. For example, the swapping part 11 may include a connector that is coupled to or decoupled from the inside of the main body 10. When the swapping part 11 moves in the connector is decoupled from the inside of the main body 10 so that the connector is coupled to the other portion of the inside of the main body 10, the swapping part 11 may move inside the main body 10.

In addition, the plurality of swapping parts 11 may be connected in a contact manner to the inside of the main body 10. For example, the plurality of swapping parts 11 may be in contact or may not be in contact with the inside of the main body 10 in a wireless charging method, rather than having a separate connector.

Additionally, the plurality of swapping parts 11 may move integrally. That is, the plurality of swapping parts 11 may move simultaneously inside the main body 10. In addition, the plurality of swapping parts 11 and the main body 10 may be connected to be integrated with each other to move upward or downward by the driving part 17 to be described later.

This is one of the methods in which the plurality of swapping parts 11 are driven according to the user's body structure. A detailed operating principles related to this structure will be described below.

The detection part 12 may be disposed on the main body 10 to face the user and may detect the user's body information. For example, the detection part 12 may be disposed at an upper side of the main body 10. The detection part 12 may include an optical sensor. The position of the detection part 12 is not limited thereto, and the detection part 12 may be disposed at various positions depending on efficient detection or ease of a design, and the like.

The detection part 12 may detect user's height information. That is, the detection part 12 may detect an overall height from the ground to the user's head.

In addition, the detection part 12 may recognize and detect a user's specific body structure. For example, the detection part 12 may detect user's waist and chest portions. That is, the detection part 12 may receive characteristic information about the waist and chest portions of the human body structure in advance and recognize the user's waist and chest portions.

The transmission part 13 may transmit location information of the swapping part 11 and charging information of the battery mounted on the swapping part 11 to the user. For example, the transmission part 13 may transmit the information to the user in at least one of a video provision manner or an audio manner.

Specifically, the transmission part 13 may be designed in various forms, such as a device and application that transmits information of the swapping part 11. For example, the transmission part 13 may include a display device installed in the main body 10 to inform the swapping part 11 that is currently empty and a charging state of the battery for each swapping part 11, and the like to the user that waits in front of the main body 10.

Alternatively, the transmission part 13 may be provided in the form of an application installed on a user's personal terminal. That is, even if the user is not in front of the main body 10, the transmission part 13 may remotely provide information on the swapping part 11 and the battery to the user through the application.

However, the transmission part 13 is not limited to the above examples and may be designed in various forms, such as a device, application, or program, which is capable of transmitting video and audio information.

Due to functions of the controller 14 described below, the transmission part 13 may recommend a swapping part 11 that is disposed at the most convenient position for use to inform the position to the user, and the user may swap the battery using the swapping part 11 recommended by the transmission part 13.

The controller 14 may control an operation of the transmission part 13 and an operation of the swapping part 11 according to the user's body information detected by the detection part 12.

First, the controller 14 may transmit information on the swapping part 11 that is suitable for the user through the transmission part 13 based on the user's body information. For example, the controller 14 may select one swapping part 11 of the plurality of swapping parts 11 based on the user's body information detected by the detection part 12. Specifically, the controller 14 may select the swapping part 11 of the plurality of swapping parts 11, which is closest to a middle height based on user's height information. That is, the controller 14 may select the swapping part 11 that is closest to a position corresponding to a height of the user's torso.

The controller 14 may operate the transmission part 13 to inform the information of the selected swapping part 11 to the user. For example, due to the controller 14, the transmission part 13 may inform the position of the selected swapping part 11 to the user.

That is, the controller 14 may recommend the swapping part 11 that is suitable for the user's body structure to the user, and the user may more easily put the used battery into the selected swapping part 11 to further improve utility of the battery swapping system 1.

In addition, based on the user's body structure, if there is no suitable and empty swapping part 11 for the user, the controller 14 may move a swapping part 11 disposed in a different compartment to the user. For example, the controller 14 may control the swapping part 11 to move between the user's waist and chest portions.

That is, based on the user's body information detected by the detection part 12, the controller 14 may specify the positions of the user's waist and chest portions and may control the swapping part 11 by moving the swapping part 11 horizontally or vertically so that the empty swapping part 11 is disposed toward the user's torso.

In this case, the controller 14 may select and move the swapping part 11 that is closest to the user among the empty swapping parts 11 to enable the swapping part 11 to move to the user more efficiently and quickly. Even with this mechanism, the battery swapping system 1 may become more useful.

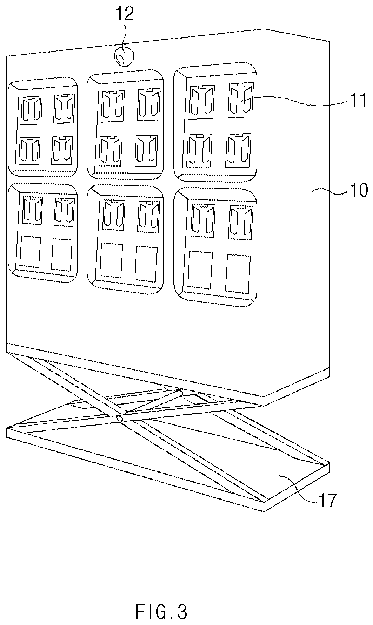

FIG. 3 is a view illustrating a state in which the driving part 17 is installed according to an embodiment of the present invention.

Referring to FIG. 3, the battery swapping system 1 may further include a driving part 17 disposed at a lower side of the main body 10 to support a bottom surface of the main body 10. The driving part 17 may be disposed between the ground and the bottom surface of the main body 10 to support the bottom surface of the main body 10. In this state, the driving part 17 may move the main body 10 and the plurality of swapping parts 11 in an upward or downward direction. Due to the structure and operation of the driving part 17 as described above, the plurality of swapping parts 11 may integrally move upward or downward together with the main body 10.

Even in this case, the controller 14 may control an operation of the driving part 17 according to the user's body information detected by the detection part 12. For example, when a user having a height greater than an average height uses the battery swapping system 1, the controller 14 may move the main body 10 and the plurality of swapping parts 11 upward through the driving part 17 to improve the user's convenience.

Conversely, when a user having a height less than the average height uses the battery swapping system 1, the controller 14 may move the main body 10 and the plurality of swapping parts 11 downward through the driving part 17.

Additionally, the battery swapping system 1 may further include a storage part 15 that stores the location information of the swapping part 11, the charging information of the battery mounted on the swapping part 11, and the operation information of the swapping part 11 controlled by the controller 14.

That is, the storage part 15 may store information about the history of use of the swapping part 11. For example, the storage part 15 may construct a database and then collect and store the information such as the position at which the swapping part 11 is selected according to the user's body structure, the position of the swapping part 11 that is mainly used, the movement pattern of the swapping part 11 by the controller 14, a charging level and swapping rate of the swapping part 11 for each position, etc.

The controller 14 may calculate the location information of the swapping part 11 stored in the storage part 15 as coordinate values and calculate an average of the coordinate values of the swapping part 11. In other words, the controller 14 may calculate a position value of the mainly used swapping part 11 based on the usage history information of the swapping part 11 stored in the storage part 15. The controller 14 may allow the swapping part 11 to wait at a position corresponding to the average of the coordinate values.

That is, when the battery swapping system 1 is not in use, the controller 14 may calculate the position of the most frequently used swapping part 11 to allow the empty swapping part 11 to be disposed at the standby position, thereby allowing a more suitable swapping part 11 to be disposed for the user.

Finally, the battery swapping system 1 may further include an input part 16 into which operation values of the swapping part 11 and the driving part 17 are input. For example, the input part 16, like the transmission part 13, may be designed in the form of a display installed on the main body 10 or an application installed in the user's personal terminal, and the like. The user may operate the swapping part 11 and the driving part 17 in a desired manner through the input part 16.

The controller 14 may control the operations of the swapping part 11 and the driving part 17 based on the operation value input by the input part 16, thereby enabling the user to use the swapping part 11 more easily and quickly.

Hereinafter, a battery swapping method according to another embodiment of the present invention is described. Detailed descriptions of contents duplicated with those of the battery swapping system 1 according to the foregoing embodiment of the present invention will be omitted.

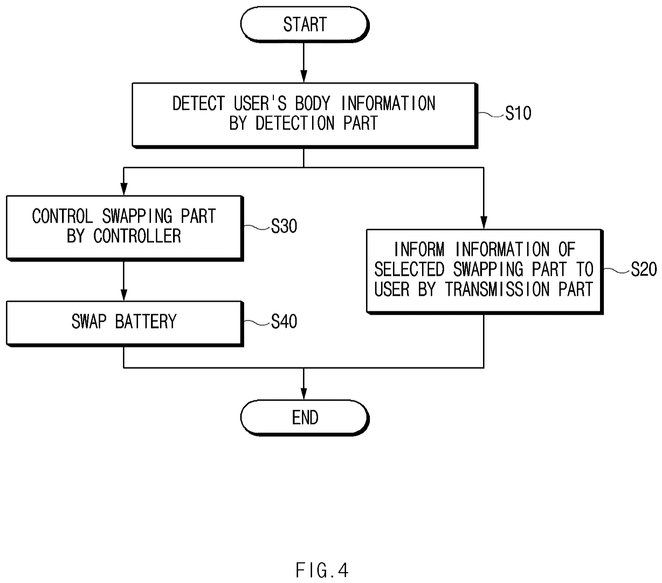

FIG. 4 is a flowchart illustrating a battery swapping method according to another embodiment of the present invention.

Referring to FIG. 4, a battery swapping method according to another embodiment of the present invention allows a user to swap a battery more easily and quickly. For example, the user may swap the battery more conveniently by using a battery swapping structure suitable for a user's body structure through the battery swapping method.

The battery swapping method may include a detection process (S10), a transmission process (S20), a control process (S30), and a swapping process (S40).

In the detection process (S10), user's body information may be detected by a detection part 12 mounted on a main body 10. The detection part 12 may be disposed on the main body 10 to face the user and may detect the user's body information. The detection part 12 may detect user's height information. In addition, the detection part 12 may recognize and detect a user's specific body structure. For example, the detection part 12 may detect user's waist and chest portions.

In the transmission process (S20), one of the plurality of swapping parts 11, in which the battery is mounted and charged, may be selected based on the user's body information detected by the detection part 12 by a controller 14. A transmission part 13 may transmit information about the selected swapping part 11 to the user.

Specifically, the transmission part 13 may transmit location information of the swapping part 11 and charging information of the battery mounted on the swapping part 11 to the user. For example, the transmission part 13 may transmit the information to the user in at least one of a video provision manner or an audio manner.

The controller 14 may select the swapping part 11 of the plurality of swapping parts 11, which is closest to a middle height based on user's height information.

The controller 14 may operate the transmission part 13 to inform the information of the selected swapping part 11 to the user. For example, due to the controller 14, the transmission part 13 may inform the position of the selected swapping part 11 to the user.

In the control process (S30), the operation of the swapping part 11 may be controlled by the controller 14 according to the user's body information detected by the detection part 12. Specifically, in the detection process (S10), the detection part 12 may detect user's waist and chest portions.

In the control process (S30), the controller 14 may control the swapping part 11 to move between the user's waist and chest portions. In addition, the plurality of swapping parts 11 may move integrally by the controller 14.

In the swapping process (S40), a used battery may be put into one of the plurality of swapping parts 11, and a charged battery may be ejected into the other swapping part 11 of the plurality of swapping parts 11.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present invention is to be considered illustrative, and not restrictive, and the technical spirit of the present invention is not limited to the foregoing embodiment.

Therefore, the scope of the present disclosure is defined not by the detailed description of the invention but by the appended claims, and all differences within the scope will be construed as being included in the present disclosure.

### [Description of the Symbols]

1: Battery swapping system
10: Main body
11: Swapping part
12: Detection part
13: Transmission part
14: Controller
15: Storage part
16: Input part
17: Driving part
S10: Detection process
S20: Transmission process
S30: Control process
S40: Swapping process

## Claims

1. A battery swapping system comprising:
a main body;
a plurality of swapping parts which are mounted on the main body and on which a battery is mounted to be charged;
a detection part disposed on the main body to face a user and configured to detect user's body information;
a transmission part configured to transmit location information of the swapping part and charging information of a battery mounted on the swapping part to the user in at least one of a video provision manner or an audio manner; and
a controller configured to control an operation of the swapping part and an operation of the transmission part according to the user's body information detected by the detection part,
wherein the controller is configured to select one of the plurality of swapping parts based on the user's body information detected by the detection part and operate the transmission part to inform information of the selected swapping part to the user.

2. The battery swapping system of claim 1, wherein the detection part is configured to detect user's height information, and
the swapping part is provided in plurality to be arranged in a height direction with respect to the ground.

3. The battery swapping system of claim 2, wherein the controller is configured to select one swapping part, which is the closest to a middle height based on the user's height information, among the plurality of swapping parts.

4. The battery swapping system of claim 1, wherein the detection part is configured to detect user's waist and chest portions.

5. The battery swapping system of claim 4, wherein the controller is configured to control the swapping part so that the swapping part moves between the user's waist and chest portions.

6. The battery swapping system of claim 1, wherein the plurality of swapping parts are movable integrally.

7. The battery swapping system of claim 6, wherein the main body is movable integrally together with the plurality of swapping parts.

8. The battery swapping system of claim 7, further comprising a driving part disposed below the main body to support a bottom surface of the main body and configured to move the main body and the plurality of swapping part upward or downward.

9. The battery swapping system of claim 1, further comprising a storage part configured to store location information of the swapping part, charging information of the battery mounted on the swapping part, and operation information of the swapping part controlled by the controller.

10. The battery swapping system of claim 9, wherein the controller is configured to calculate the location information of the swapping part, which is stored in the storage part, as coordinate values, calculate an average of the coordinate values of the swapping part, and allow the swapping part to standby at a position corresponding to the average of the coordinate values.

11. A battery swapping method comprising:
a detection process of detecting user's body information by a detection part mounted on a main body;
a transmission process of selecting one swapping part of a plurality of swapping parts, on which a battery is mounted to be charged, based on the user's body information detected by the detection part to transmit information of the selected swapping part to a user through a transmission part, by a controller;
a control process of controlling an operation of the swapping part by the controller according to the user's body information detected by the detection part; and
a swapping process of putting a used battery into one swapping part of the plurality of swapping parts to eject a charged battery to the other swapping part of the plurality of swapping parts.

12. The battery swapping method of claim 11, wherein, in the detection process, the detection part detects user's height information, and
in the transmission process, the controller selects one swapping part, which is the closest to a middle height based on the user's height information, among the plurality of swapping parts.

13. The battery swapping method of claim 11, wherein, in the detection process, the detection part detects user's waist and chest portions, and
in the control process, the controller controls the swapping part so that the swapping part moves between the user's waist and chest portions.

14. The battery swapping method of claim 11, wherein, in the control process, the plurality of swapping parts integrally move by the controller.
